# EUROPEAN PATENT SPECIFICATION

(11) **EP 4 372 708 B1**
(45) Date of publication and mention of the grant of the patent: **27.08.2025**
(21) Application number: 24166226.1
(22) Date of filing: 30.09.2020
(51) Int. Cl.: G08B 25/00, G08B 13/08, G08B 25/10

(54) **A SECURITY MONITORING SYSTEM**
SICHERHEITSÜBERWACHUNGSSYSTEM
SYSTÈME DE SURVEILLANCE DE SÉCURITÉ

(30) Priority: 30.09.2019 ES 201930846
(43) Date of publication of application: 22.05.2024
(62) Divisional of application: 20786499.2
(73) Proprietor: Verisure Sàrl, 1290 Versoix (CH)
(72) Inventor: IGLESIAS, Angel Francisco Piorno, Versoix, Geneva (CH); ECHEVERRIA, Jon Noble, Versoix, Geneva (CH)
(74) Representative: Dennemeyer & Associates S.A.

(56) References cited:
- FR-A1- 3 040 817
- US-A1- 2009 243 837
- US-A1- 2016 117 913
- US-A1- 2017 039 843
- US-A1- 2017 109 998

## Description

### Technical field

The present invention relates to a security monitoring system for a building or a secured space within a building and a method of disarming such a system.

### Background

Security monitoring systems for monitoring premises typically provide a means for detecting the presence and/or actions of people at the premises, and reacting to detected events. Commonly such systems include sensors to detect the opening and closing of doors and windows, movement detectors to monitor spaces for signs of movement, microphones to detect sounds such as breaking glass, and image sensors to capture still or moving images of monitored zones. Such systems may be self-contained, with alarm indicators such as sirens and flashing lights that may be activated in the event of an alarm condition being detected. Such installations typically include a central unit, generally mains powered, that is coupled to the sensors, detectors, cameras, etc. ("nodes"), and which processes received notifications and determines a response. The central unit may be linked to the various nodes by wires, but increasingly is instead linked wirelessly, rather than by wires, since this facilitates installation and may also provide some safeguards against sensors/detectors effectively being disabled by disconnecting them from the central unit. Similarly, for ease of installation and to improve security, the nodes of such systems are typically battery powered rather than mains powered.

As an alternative to self-contained systems, a security monitoring system may include an installation at a premises, domestic or commercial, that is linked to a Central Monitoring Station (CMS) where typically human operators manage the responses required by different alarm and notification types. In such centrally monitored systems, the central unit at the premises installation typically processes notifications received from the nodes in the installation, and notifies the Central Monitoring Station of only some of these, depending upon the settings of the system and the nature of the detected events. In such a configuration, the central unit at the installation is effectively acting as a gateway between the nodes and the Central Monitoring Station. Again, in such installations the central unit may be linked by wires, or wirelessly, to the various nodes of the installation, and these nodes will typically be battery rather than mains powered.

In both these types of systems, the central unit is typically responsible for arming and disarming the system but may not be located close to an entrance door. When the house owner returns to the monitored premises where the monitoring system is in an armed state, the system must be disarmed fairly quickly, for example within 20 to 30 seconds of opening an entrance door. If the central unit is not located close to the entrance door, it may be difficult for the owner to reach the central unit and enter the disarm code - which may typically be 6 to 8 characters or digits, in time. This is obviously poses an even greater challenge for the elderly or infirm. For this reason it is known to provide a unit close to the entrance door by means of which the owner can disarm the system. Such a unit, which may be termed a disarm node, may be provided inside the protected premises close to each main entrance, but in other installations only the single main entrance will be provided with a disarm node. The disarm node will typically be fixed, for example to a wall or other surface of the premises, close to the relevant entrance to the building or protected space.

Although the provision of a disarm node adjacent the entrance to the protected premises means that the householder doesn't have to walk all the way to the central unit to enter the disarm code, there are occasions when it is inconvenient to have to enter the disarm code manually even through a disarm node. For example, if the householder is carrying an infant, packages, or is otherwise encumbered, or if the householder is on crutches, it may still be extremely inconvenient to have to enter a disarm code manually.

It would be desirable to be able to reduce or even eliminate this problem while still retaining a high level of security.

Embodiments of the invention enable hands-free disarming of a security monitoring system while retaining a high level of security.

US 2017/039843 A1 discloses a security system having a central unit, a disarm node and a portable authentication device configured to communicate a unique identifier with a registration signal.

US 2017/109998 A1 discloses an automation system that enables a user to deactivate a security portion of the automation system using a mobile device. The automation system detects the presence of an authorized mobile device which may modify the status of at least one component of the automation system.

### Summary of the invention

According to a first aspect, the present invention provides a security monitoring system for a building or a secured space within a building, the system including:
a central unit for controlling, arming and disarming the security monitoring system, and having a radio frequency transceiver;
a door giving access to the building or the secured space;
an electrically controlled lock which is lockable to lock the door to prevent the door being opened from outside the building or the secured space, and which can be unlocked to enable the door to be opened from outside the building;
a disarm node for disarming the system, the node having a user interface to receive a user input to change the status of the system, and a radio frequency transmitter to transmit, in consequence of the user input, a status change message to the central unit, the disarm node being located outside the building or the space;
and a portable authentication device to permit hands-free disarming of the security monitoring system, the portable authentication device including a radio transceiver and having a portable authentication device identity that is registered with the central unit;
   the disarm node being configured to:
      (i) transmit from the disarm node's transceiver, using a short-range transmission mode, a wake up message including a status change event identifier;
   the portable authentication device being configured to respond to receipt of the wake up message by transmitting, using the portable authentication device's transceiver, a response message including the status change event identifier and the portable authentication device identity;
   the central unit being configured:
      in response to receiving the response message from the portable authentication device, to :
      (i) check whether the status change event identifier is for a current status change event;
      (ii) check whether the portable authentication device identifier is for a portable authentication device registered with the central unit; and
if the two checks both give positive results, to implement the requested status change, and, if the status change request includes a request to unlock the electronic lock, to use the central unit's transceiver to transmit a signal to cause the electronic lock to be unlocked.

Such a system provides the convenience of hands-free disarming while maintaining the security of the system.

In one embodiment, the central unit is configured to:
generate the status change event identifier in response to receipt of the status change message from the disarm node; and
transmit, using the central unit's transceiver, the generated status change event identifier to the disarm node.

In another embodiment, the disarm node is configured to:
generate the status change event identifier in response to receipt of the user's status change request;
transmit, using the disarm node's transceiver the generated the status change event identifier to the central unit.

In an embodiment, the central unit is configured, in the event that the requested status change is implemented, to transmit, using the central unit's transceiver, a status change confirmation message.

According to a second aspect, the invention provides a method of disarming a security monitoring system for a building or a secured space within a building, the system including:
a central unit for controlling, arming and disarming the security monitoring system, and having a radio frequency transceiver;
a door giving access to the building or the secured space;
an electrically controlled lock which is lockable to lock the door to prevent the door being opened from outside the building or the secured space, and which can be unlocked to enable the door to be opened from outside the building;
a disarm node for disarming the system, the node having a user interface to receive a user input to change the status of the system, and a radio frequency transmitter, the disarm node being located outside the building or the space;
and a portable authentication device to permit hands-free disarming of the security monitoring system, the portable authentication device including a radio transceiver and having a portable authentication device identity that is registered with the central unit;
the method comprising:
   (i) using the disarm node's transceiver to:
      transmit, in consequence of the user input, a status change message to the central unit; and
      transmit, using a short-range transmission mode, a wake up message including a status change event identifier;
   (ii) using the portable authentication device's transceiver to transmit, in response to receipt of the wake up message, a response message including the status change event identifier and the portable authentication device identity;
   (iii) checking, using the central unit, in response to receiving the response message from the portable authentication device, whether the status change event identifier is for a current status change event, and whether the portable authentication device identifier is for a portable authentication device registered with the central unit; and
   (iv) if the two checks both give positive results, implementing the requested status change, and, if the status change request includes a request to unlock the electronic lock, using the central unit's transceiver to transmit a signal to cause the electronic lock to be unlocked.

Preferably, the method further comprises:
generating the status change event identifier in the central unit in response to receipt of the status change message from the disarm node; and
transmitting, using the central unit's transceiver, the generated status change event identifier to the disarm node.

In an embodiment, the method further comprises:
generating the status change event identifier in the disarm node in response to receipt of the user's status change request;
transmitting, using the disarm node's transceiver the generated the status change event identifier to the central unit.

The method may further comprise:
in the event that the requested status change is implemented, transmitting, using the central unit's transceiver, a status change confirmation message.

Other aspects of the system are the following:
By providing a disarm node inside the protected space, close to the door whose opening has been detected, to transmit a wake up beacon signal to the portable authentication device, it is possible to use short-range transmission so that only a portable authentication device in the vicinity of the disarm node (and hence of the door whose opening has been detected) will respond to the disarm transmission. This improves security compared to transmitting the disarm transmission directly from the central unit, because the necessarily relatively long range transmission from the central unit would trigger any portable authentication device within range of the central unit, rather than only those adjacent the disarm node associated with the door that was opened. By transmitting the response from the activated portable authentication device directly to the central unit rather than via the disarm node not only does the central unit receive the disarm instruction from the portable authentication device more quickly (since the disarm node doesn't need to receive the signal and process it for retransmission to the central unit), but importantly this approach eliminates a source of considerable battery drain for the battery of the disarm node - as it is likely that the disarm node would otherwise need to perform the reception, processing and transmission of disarm instructions from a portable authentication device several times a day. Given the importance of maintaining good battery life in the nodes of security monitoring systems (the goal is typically an installed battery life of at least 5 years using only a small battery), this is a significant saving.

The security monitoring system of the first aspect may include multiple disarm nodes each associated with different door giving access to the building or the secured space, each disarm node having a unique disarm node ID, each of the different doors having a respective door sensor with a different respective ID, and the central unit storing the disarm node IDs, the door sensor IDs, and an association between each door sensor and an associated one of the disarm nodes; wherein
the central unit is configured, in response to receiving a door opening message from a door sensor, to use a door sensor identifier included in the received message to identify the associated disarm node and to include the disarm node identifier for the identified disarm node in the transmitted wake-up message to selectively target the identified disarm node among the multiple disarm nodes of the system.

The selective targeting of the disarm node associated with the door whose opening has been sensed improves security by ensuring that disarm is not caused by the presence of a portable authentication device near one of the other disarm nodes.

In this way, only the disarm node associated with the opened door is caused to transmit a wake signal or beacon, so that only portable authentication devices in the vicinity of that door will receive the signal or beacon. This increases security by reducing the risk that a portable authentication device left near another door, or carried by a user near another door, might trigger a hands-free disarm of the system - something that might otherwise happen if a bad actor without an appropriate portable authentication device were responsible for the door being opened.

According to a second aspect helpful for understanding the invention, a central unit for controlling, arming and disarming a security monitoring system has a radio frequency transceiver and being configured:
in response to receiving a door opening indication/message from the door sensor, to:
(i) start an entry period timer;
(ii) transmit a wake up message, including a disarm transmission identifier, to the disarm node to cause the RF transmitter of the disarm node to transmit a wake up signal/beacon, including the disarm transmission identifier received from the central unit, to wake the portable authentication device; and
(iii) to start a hands-free disarm timer;
(iv) in response to receiving, before expiry of the hands-free disarm timer, a radio frequency disarm signal from the portable authentication device that includes the registered portable authentication device identity and the disarm transmission identifier, to disarm the security monitoring system;
(v) in the event that no RF signal including the registered portable authentication device identity and the disarm transmission identifier is received before the hands-free disarm timer expires, to transmit a signal to the disarm node to cause the disarm node to provide a notification to the effect that the attempted hands-free disarm has failed; and
(vi) in the event that the security monitoring system is not disarmed before expiry of the entry period, to cause the security monitoring system to enter an alarm state.

As already noted , by sending the wake up message to the disarm node associated with the door whose opening has been sensed to transmit the wake up instruction to the portable authentication device, rather than sending a disarm instruction directly to the portable authentication device from the central unit, security is enhanced because only portable authentication devices in the vicinity of the relevant disarm node will receive the disarm instruction.

According to another aspect helpful for understanding the invention, a disarm node for disarming a security monitoring system for a building or a secured space within a building is provided, the system including:
a central unit for controlling, arming and disarming the security monitoring system;
a door sensor to detect the opening of a door giving access to the building or the secured space;
the disarm node having a user interface to receive a user input to disarm the system, and a radio frequency transmitter to transmit, in consequence of the user input, a disarm signal to the central unit, and being configured:
   in response to receiving a wake up message from the central unit, to transmit a wake up beacon signal including a disarm transmission identifier received in the wake up message; and
   in response to receiving from the central unit a signal indicating that an attempted hands-free disarm has failed to provide a notification to the effect that the attempted hands-free disarm has failed and, optionally, to prompt the user to provide disarm credentials through the user interface or to disarm the system in another way.

According to a still further aspect helpful for understanding the invention, a portable authentication device or tag for use with a security monitoring system for a building or a secured space within a building is provided, the system including:
a central unit for controlling, arming and disarming the security monitoring system;
a door sensor to detect the opening of a door giving access to the building or the secured space;
a disarm node for disarming the system, the node having a user interface to receive a user input to disarm the system, and a radio frequency transmitter to transmit, in consequence of the user input, a disarm signal to the central unit;
the portable authentication device comprising a radio frequency transceiver, a memory storing a portable authentication device ID, and a processor operatively connected to the transceiver and the memory; wherein the portable authentication device is configured to:
   receive, on a first radio channel, the disarm instruction, including a disarm transmission identifier, from the disarm node to transmit to the central unit a disarm message containing the disarm transmission identifier and the portable authentication device ID on a second radio channel whose transmission parameters are different from those of the first radio channel and are specified in the received instructions; and to control the transceiver to transmit the message containing the disarm transmission identifier and the portable authentication device ID on the second radio channel using the specified transmission parameters.

By arranging for the portable authentication device or tag to send the message containing the disarm transmission identifier and the portable authentication device ID on the second radio channel on a channel whose specified transmission parameters differ from those on which the disarm instruction message was received, and which are specified in the instruction from the central unit, it is harder for bad actors to impersonate a valid portable authentication device and hence the security of the system is enhanced.

According to another aspect helpful for understanding the invention, a method of controlling a security monitoring system for a building or a secured space within a building is provided, the system including:
a central unit for controlling, arming and disarming the security monitoring system;
a door sensor to detect the opening of a door giving access to the building or the secured space;
a disarm node for disarming the system, the disarm node having a user interface to receive a user input to disarm the system, and a radio frequency transmitter to transmit, in consequence of the user input, a disarm signal to the central unit;
and a portable authentication device to permit hands-free disarming of the security monitoring system, the portable authentication device including a radio transceiver and having a portable authentication device identity that is registered with the central unit;
the method being performed by the central unit and including:
   receiving a door opening message from the door sensor; and in response:
   starting an entry period timer;
      (i) transmitting a wake up message, including a disarm transmission identifier, to the disarm node to cause the RF transmitter of the disarm node to transmit a wake up signal/beacon, including the disarm transmission identifier received from the central unit, to wake the portable authentication device; and
      (ii) in response to receiving, before expiry of the entry period timer, a radio frequency disarm signal from the portable authentication device that includes the registered portable authentication device identity and the disarm transmission identifier, disarming the security monitoring system; and
      (iii) in the event that the security monitoring system is not disarmed before expiry of the entry period, causing the security monitoring system to enter an alarm state;
   wherein, additionally either:
      the central unit starts a hands-free disarm timer in response to receiving a door opening indication from the door sensor, and in the event that no RF signal including the registered portable authentication device identity and the disarm transmission identifier is received before the hands-free disarm timer expires, transmitting a signal to the disarm node to cause the disarm node to provide a user notification to the effect that the attempted hands-free disarm has failed; or the disarm node starting its own hands-free disarm timer in response to receiving the wake up message from the central unit, and, in the event that the hands-free disarm timer of the disarm node expires without the disarm node having been informed by the central unit of a disarming of the security monitoring system, providing a user notification to the effect that the attempted hands-free disarm has failed.

The method enables hands-free disarming of the system while maintaining the security of the system and avoiding excessive battery drainage in the disarm node(s).

Embodiments of the invention will now be described, by way of example only, with reference to the accompanying drawings, in which:
Figure 1 is an overview of a security monitoring system according to a first aspecthelpful for understanding the invention;
Figure 2 is a schematic drawing showing a stylised building in which a security monitoring system according to an aspect helpful for understanding the invention is installed;
Figure 3 is a timing diagram illustrating a method of controlling a security monitoring system according to an aspect helpful for understanding the invention
Figure 4 is a schematic drawing showing features of elements of the security monitoring system according to an aspect helpful for understanding the invention the invention;
Figure 5 is a schematic drawing illustrating an arrangement of elements of a security monitoring system according to an aspect helpful for understanding the invention;
Figure 6 is a schematic drawing illustrating operation of the receiver function of the portable authentication device and a possible packet structure for a transmission from a disarm node; and
Figure 7a and 7b are schematic drawings illustrating a security monitoring system according to an embodiment of the invention in which a disarm node is provided outside the zone or building protected by the system.

### Specific description

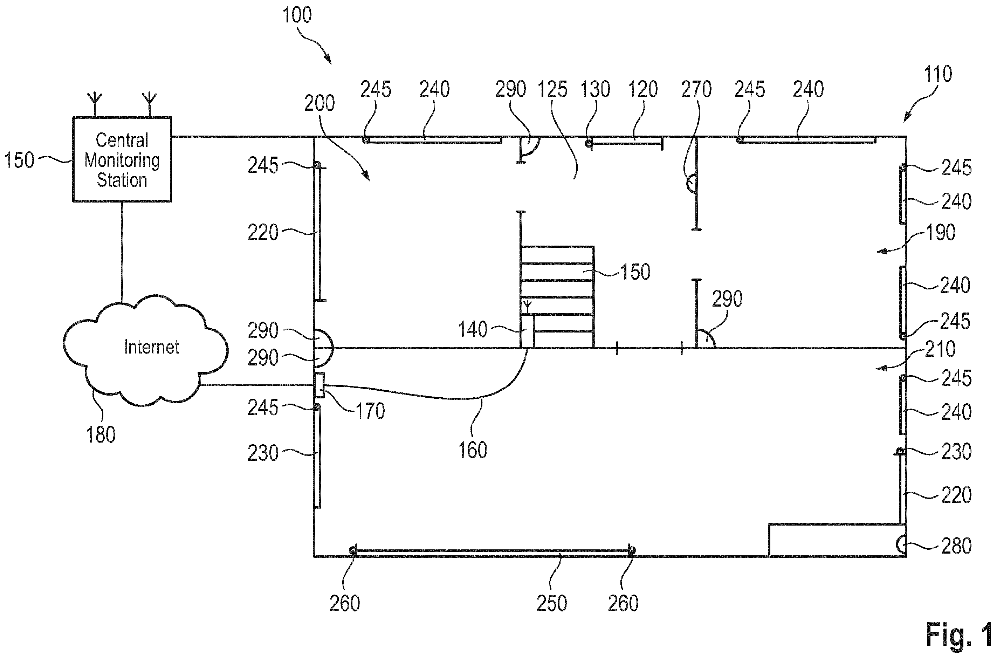

Figure 1 is an overview of a security monitoring system according to a first aspect of the invention. The Figure shows a rough plan view of a domestic dwelling 110, which may be a building such as a house or a secured space, such as an apartment, in a building and which is protected by a security monitoring system 100. The dwelling has a front door 120, which is a main entrance giving access to the entrance hall 125 of the building or the secured space. The door 120 is fitted with a door sensor 130 to detect the opening of the door. The door sensor 130 is typically, but not necessarily, a magnetically triggered switch which is fitted to the opening side of the door, opposite to the hinge side. The door sensor 130 includes an RF transmitter, not shown, that transmits an entry violation signal to a central unit 140 of the monitoring system 100 in the event that the door is opened. In this installation, the central unit 140 is mounted under the stairs 150 that lead to an upper floor. The central unit includes at least one first RF transceiver to receive transmissions from the door sensor and other nodes of the system. The central unit communicates with a Central Monitoring Station 150 either through a wired connection via a wired data link 160 to a broadband connection 170 within the premises to the internet 180, or wirelessly, typically using a second transceiver. The central unit may also communicate using a Wi-Fi connection, for example to a Wi-Fi access point that gives access to the Internet over a broadband or other data link. The first RF transceiver(s) for communication with the nodes of the system will typically use an ISM (Industrial Scientific and Medical) band, such as the 868MHz band in Europe. The first RF transceiver(s) may also support Bluetooth. The second transceiver, for communication with the Central Monitoring Station 150 may also be able to use an ISM band, such as the 868 MHz band in Europe, but may also be able to use a mobile (PLMN) network such as GSM 3G, 4G, or UMTS. Preferably the central unit 140 has several ways of communicating with the Central Monitoring Station 150, so that even if one route is jammed or otherwise unavailable, the central unit is still able to report to, and receive communications from, the Central Monitoring Station.

The residence of Figure 1 includes several rooms 190, 200, 210, in addition to the entrance hall 125. Rooms 190 and 200 lead off the entrance hall, and have windows 240 but no external doors. Typically all of the windows will be provided with one or more sensors 245 to detect window opening, glass breakage, tampering or the like. Room 210 is a combined kitchen and dining room which has an external door 220, which is also fitted with a door sensor 230. The kitchen dining room 210 also has a row of sliding and folding glazed doors 250 for which door sensors 260 are also provided.

As is conventional, the system also includes motion detectors, such as PIR detectors 290 to monitor all or selected ones of the rooms or spaces within the building, some or all of which may have associated image capture devices such as video cameras. These or other motion sensors may also be used to detect the opening of an entrance door, instead of utilising a door sensor such as a magnetic contact device. The system may also include one or more microphones to detect, and capture, sounds such as breaking glass, and other sensors to detect the opening of internal doors, the occurrence of flooding, the incidence of fire or smoke, etc.

In the hall 125, close to the front door 120, a disarm node 270 is mounted on a wall. The disarm node 270 has a user interface, including a touch screen or keypad to receive a user input to disarm the system, and a radio frequency transmitter, not shown, to transmit, in consequence of the user input, a disarm instruction to the central unit 140. A similar disarm node 280 is also mounted on a wall of the kitchen 210 near to the back door 220. Although the doors 250 also give access to the secured space, and are provided with door sensors to detect when they are opened, no corresponding disarm node is provided for them. This is because the sliding doors 250 are normally kept bolted on the inside, so that there is no expectation that an occupier or resident will ever enter the building through these doors when the security and monitoring system is armed. As such, any entry through those doors when the system is armed is likely to be an unauthorised entry. Similarly, it may be that the back door is always bolted on the inside when the house is left unoccupied, so that there is no expectation of a legitimate entrance through the back door when the security monitoring system is armed - in which case, the disarm node 280 for the back door may not be provided. Conversely, the owner may want to arm the system whenever she works in her back garden, which is accessed via the back door 220 - so that it is useful to provide a disarm node in the kitchen by the back door. Indeed, a gardening owner might find it very attractive to be able to disarm the system from the kitchen rather than having to walk to the central unit 140, as this would reduce the likelihood that mud from the garden would be walked through to the hall, for example.

The system is arranged so that it can be disarmed from the armed state by using the disarm node adjacent to or near the door through which the protected space was entered. Once the door sensor is triggered, detecting the opening of a door, it transmits an RF signal to the central unit, including an identifier for the door sensor - so that the central unit can distinguish between signals received from door sensors at different doors. In response to receiving a door opening indication/message from a door sensor, the central unit starts an entry period timer - which sets a time window within which the system must be disarmed, failing which, the central unit will cause the security monitoring system to enter an alarm state. Entering an alarm state may involve the sounding of alarms and flashing lights in or at the premises. If the alarm installation is connected to a central monitoring station, the central unit will generally signal the alarm state to the Central Monitoring Station - which may lead to human intervention, video scanning, audio monitoring, etc.

In order to disarm the system, typically a code may need to be entered into the system, either at the central station, or at a disarm node. If there is more than one disarm node, the central unit may use knowledge of the proximity of particular disarm nodes and particular door sensors to permit disarm only from the disarm node adjacent the door sensor (e.g. movement detector such as a PIR device, or magnetic contact device) that transmitted the door open signal. The disarm nodes will typically include a physical keypad or a touch screen to enable a user to enter an appropriate disarm code, and may include visual indicators and/or a display panel to indicate progress and current system status. This approach to disarming an armed system requires manual interaction with the disarm node. The disarm nodes may also each include a near field communication (NFC) antenna and transceiver for communication with an NFC-enabled device, such as a portable authentication device, a mobile phone, a fob, a watch, etc. to enable the system to be armed and disarmed by bringing the NFC-enabled device within a few centimetres of the disarm node. But again, in order to be able to disarm the system with such an NFC-enabled device, a user must have a hand free to bring the NFC-enabled device into near-contact with the disarm node.

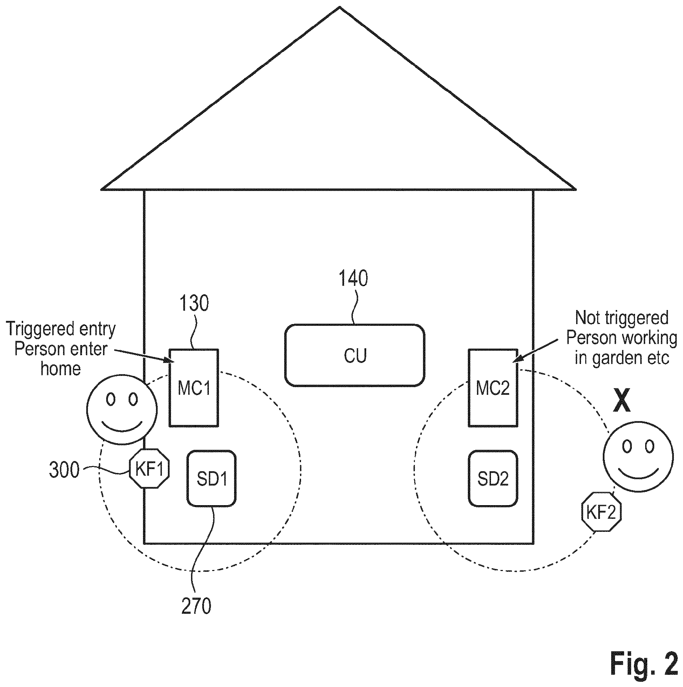

In order to permit hands-free disarming, the system is further provided with one or more portable authentication device, or key tags. The or each portable authentication device has a portable authentication device identity that is registered with the central unit, and a transceiver to receive signals from a disarm node and to transmit signals to the central unit. The operation of the system using one or more such portable authentication devices will now be described with reference to Figures 2, 3 and 4.

Figure 2 shows a stylised building in which a security monitoring system according to an embodiment of the invention is installed. The installation includes a central unit 140, and a door 50 giving access to the building has a door sensor 130 to detect the opening of the door 50. Adjacent the door 50 and inside the secured space is a disarm node 270. The disarm node is preferably secured to the structure of the building so that its location with respect to the door 50 is fixed and the association between the particular door sensor and the disarm node. The property's owner/resident 66 has a portable authentication device 300 which can be used to enable hands-free disarming of the monitoring system. The portable authentication device has an identity that has been registered with the central unit, and there may be more than one such portable authentication device, each with a unique identifier which is registered with the central unit and stored in its memory.

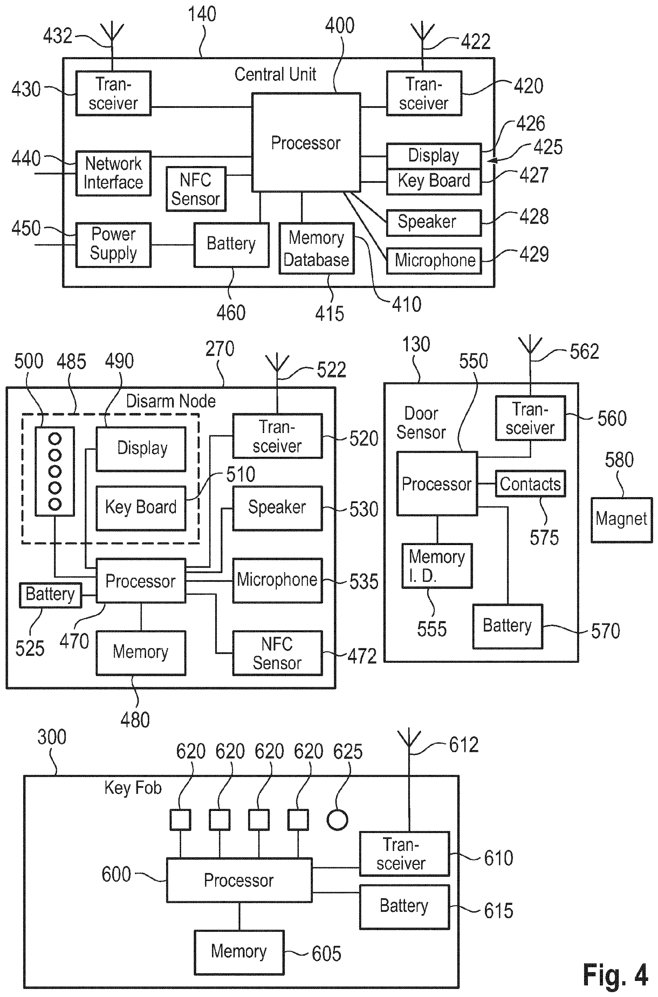

Figure 4 shows the main components of the various devices that take part in the hands-free disarming process. The central unit 140 includes a processor 400 with an associated memory 410 which stores, among other things, identities for the portable authentication devices that are registered to the system, identities for the detectors (e.g. PIRs and/or magnetic contact devices) and disarm nodes of the system together with an association between each disarm node and the detector for the access door closest to the relevant disarm node. These identities and associations are stored in a database 415 within the memory 410. The central unit includes at least one RF transceiver 420, with associated antenna 422, for communication with the various nodes and sensors of the monitoring system. Typically, there will be a second transceiver 430 as shown , also with an associated antenna 432, for communication with the central monitoring station 150, as a backup or alternative to a wired data connection to the Internet via a network interface 440. The antennas of the various transceivers will typically all be internal to the central unit. The processor 400 is connected to, and controls, the memory 410, transceivers 420, 430 and the network interface 440. The central unit generally draws power from the domestic power supply ( generally referred to as a mains power supply) which feeds a power supply 450 within or associated with the central unit. The central unit also includes a backup battery power supply which automatically becomes operational in the event that the external power supply fails. The internal battery power supply is based on rechargeable cells 460 that are kept continuously topped up by the power supply 450. The central unit may also include a user interface 425, including a display 426, a keypad or keyboard 427, a loudspeaker 428, and a microphone 429. The keypad or keyboard may be a provided by making the display a touch-sensitive display, or as a unit distinct from the display. The central unit may be arranged to accept through the keypad or keyboard a code or codes to arm and disarm the system. The central unit may also include a near field communication (NFC) antenna and a corresponding NFC chip or equivalent circuitry which can be used, for example, to detect the presence of a "disarm dongle" provided to the user of the system and which is capable of communicating with the central unit using Near Field Communication. The portable authentication devices may also be provided with an NFC antenna and chip or equivalent circuitry, so that they can be used as "disarm dongles" with the central unit and with NFC-enabled disarm nodes.

The disarm node 270 includes a processor 470 with an associated memory 480 that stores an ID for the disarm node. The disarm node also includes a user interface 485 comprising a display 490 (optional), indicators, e.g. LEDs, 500, a keyboard or number pad, 510 - although this functionality can alternatively be provided through the use of a touch screen display in place of display 490. A transceiver 520, with an associated antenna 522 (which will typically be internal, rather than external as illustrated), is controlled by the processor 470, and is used for communicating with the central unit 140 and the portable authentication device 300. The disarm node includes a battery power supply 525, and in general this will be the only power supply as typically it is preferred not to have to connect disarm nodes to the mains power supply. A loudspeaker 530 is provided so that audible messages and instructions can be given to a user at the disarm node. These audible messages an instructions may be automated ones, generated by the central unit or by the disarm node itself, but additionally the loudspeaker 530 can be used to relay messages from a central monitoring station 150. For example, the loudspeaker may be used to provide a disarm success or failure message, and to provide a prompt for the user to enter credentials (e.g. passcode) in the event that hands free disarm has failed. Conveniently, the disarm node may also include a microphone 535 to permit a user at the disarm node to hold a conversation with a human operative in, for example, a central monitoring station 150, or even with the emergency services - for example if patched through by the central monitoring station. Preferably, the disarm node 270 is secured to the building protected by the security monitoring system, for example attached to an internal wall at a height convenient for user operation - for example fixed at a height between 1 metre and 1.5 metres from the floor. The system may be so arranged that a disarm node can only be used for disarming the system from an armed state, or may be arranged to permit the system to be armed and disarmed from a disarm node. Like the central unit, the disarm node may also include a Near Field Communication antenna and chip 472 to enable a disarm dongle, such as an NFC-enabled portable authentication device, to be used to disarm the system by bringing the dongle within a few centimetres of the disarm node.

The disarm node may also be configured to encrypt its radio transmissions, and to decrypt received signals, so that secure communications with the central unit are possible. The encryption may be based on a secret shared between the central unit and the disarm node.

The detector to detect the opening of the door is here illustrated as a door sensor 130. This door sensor includes a processor 550, with an associated memory 555 which stores an identifier for the door sensor, a transceiver 560, with an associated internal antenna 562, connected to, and controlled by the processor 550, all powered by a battery power supply 570. As with the disarm node, typically the battery power supply 570 will be the only power supply for the door sensor. The door sensor includes in addition a switch, for example a pair of contacts, 575, that are controlled by the opening and closing of the door with which the door sensor is associated. Typically, the contacts 575 respond to the presence of a magnetic field provided by a magnet 580. The magnet is typically attached to the leaf of the door, while the contacts are typically secured to the frame of the door. The contacts 575 may be closed in the presence of the magnetic field, opening when the contacts and the magnet are moved apart as the door opens, or they may be open in the presence of the magnetic field, closing when the field is taken away as the door is opened. Alternatives, such as Hall effect sensors, or an optical sensing arrangement, can be used in place of magnetically controlled contacts. But, because the door sensor is battery powered, the sensor arrangement is preferably one that consumes no or very little power in the resting (door closed) state - which makes the use of magnetically controlled contacts attractive.

The portable authentication device 300 includes a processor 600, with an associated memory 605 that stores an identifier for the portable authentication device, a transceiver 610, and a battery 615 that provides power to the processor and the transceiver. Transceiver 610, which has an associated antenna 612, may be a wake on radio transceiver. The use of a wake on radio transceiver typically enables a reduction in the amount of power consumed by the portable authentication device, thereby extending the life of the battery of the portable authentication device , typically to several years. Alternatively, the transceiver may be a conventional polling transceiver designed for low power consumption. Such a polling transceiver, when in a resting state, periodically powers just the front end of its receiver circuit to listen for polling signals. If a polling signal is detected, possibly subject to some power level minimum, the rest of the receiver circuit is energised to receive transmissions. Such a polling transceiver may listen for no more than about 10ms, e.g. for 2ms each second, or every two seconds, unless polling signals are detected. The frequency with which the transceiver carries out polling is a compromise between battery life and responsiveness. A period between poling events of 1 to 2 seconds will typically give satisfactory responsiveness with acceptable battery life. Typically the system will be configured to enable the poling period to be set, and changed, via an RF configuration command from the central unit.

The transceiver, of whatever kind, is controlled by the processor and enables radio communication with the central unit 140 and the disarm node 270. The portable authentication device may also include one or more buttons 620 which a user can use to issue commands or responses. The portable authentication device may also include one or more visual indicators 625, for example one or more LEDs, to indicate a status, to confirm a button press, or the like. For example, a single multi-coloured indicator, such as an LED, may be used to provide multiple different indications while keeping component count low and enabling the portable authentication device dimensions to be made compact.

The portable authentication device is preferably configured to encrypt its radio transmissions, and to decrypt received signals, so that secure communications with the central unit are possible. The encryption may for example be based on a secret shared between the central unit and the portable authentication device.

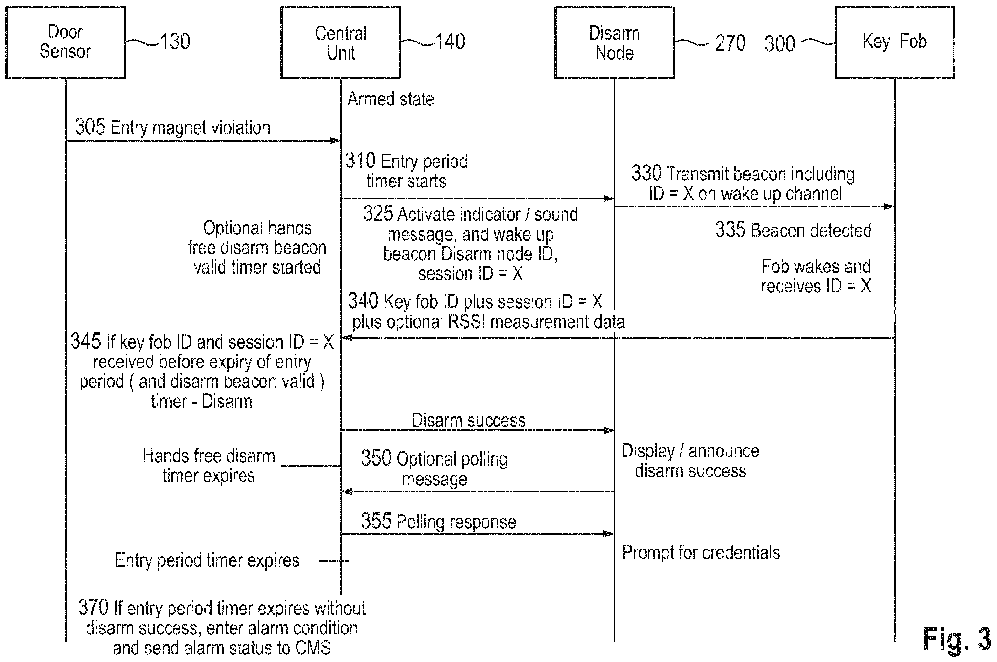

Figure 3 is a timing diagram showing the sequence of events and actions of the various elements of the security system that characterise a method, according to an embodiment of the invention, of controlling a security monitoring system to achieve hands-free disarming of the system. The diagram concerns the operations of the door sensor 130, the central unit 140, the disarm node 270, and the portable authentication device 300.

The method start at 305 with the detector 130 sensing an event, the opening of the door whose status it senses, and responding to this by using its RF transceiver to transmit an entry violation message. This entry violation message, which includes the detector's ID, is received at a transceiver of the central unit 140. In this example it is assumed that the detector is a magnetic contact device, but the method is the same or essentially the same if door opening is detected using a motion sensor such as a PIR device.

The central unit starts, at 310, an entry period timer, which is set for the duration of the period within which the disarm process needs to be completed before the central unit causes the system to enter an alarm condition - for example in the range 20 to 40 seconds. The central unit identifies the detector that transmitted the entry violation message from the detector ID contained in the received message, and retrieves from the database 415 the ID of the disarm node that is associated with the identified door sensor. If no disarm node is associated with the identified door sensor, the central unit waits for the input of a disarm code at the user interface 425 or for the arrival of a message from another disarm node (e.g. a message to the effect that the disarm passcode has been entered at that disarm node) if that is permitted by the set-up of the system. But, if the database reveals that the door sensor is associated with a disarm node, the central unit includes the ID code for that disarm node in a message which it transmits, at 315, to the disarm node 270 to cause the disarm node to activate, at 320, an indicator, an LED 500 for example, or to make a sound through loudspeaker 530, to indicate to the person entering the secured space that the system is armed and that action must be taken to disarm the system within the period set for the entry period timer. The message also causes the disarm node to transmit, at 330, a beacon signal or a polling signal to wake the transceiver in any portable authentication device within the vicinity of the targeted disarm node, and includes a special identifier to be included in the beacon signal or polling signal, and details of the packet countdown to be used. The special identifier will typically be a random or pseudo random number whose value changes at each use. The portable authentication device listens for beacon signals on one or more channels whose parameters are known to each of the portable authentication devices - for example by having been pre-programmed, but more preferably having been communicated to the or each f portable authentication device when that portable authentication device first registered with the central unit (although of course the central unit could periodically update these parameters through an exchange of messages with the portable authentication device (s). At this time, the central unit 140 preferably also starts, at 325, a hands-free disarm beacon valid timer, which determines the time within which reception by the central unit of a message from a portable authentication device that includes the special identifier will be effective to disarm the system. The hands-free disarm beacon valid timer setting is also included in the message sent to the disarm node. The characteristics of beacon or polling signal transmitted by the disarm node are chosen to make the effective range of the beacon signal small - preferably of the order of a few metres, e.g. no more than 5 metres for detection by a portable authentication device, so that it will only be effective in waking a portable authentication device in the immediate vicinity of the disarm node. These characteristics will be discussed in more detail later.

The transceiver 610 of a portable authentication device 300 that is within a few metres of the disarm node receives the beacon signal and wakes up. The transceiver 610 receives and decodes the beacon signal, retrieving the special identifier. The controller of the portable authentication device then causes the transceiver 610 of the portable authentication device to transmit, at 340, a message including the portable authentication device ID and the special identifier to the central unit 140. The central unit checks that the special identifier is valid (meaning that it is one issued within the current period of the hands-free disarm beacon valid timer) and also checks to see whether the portable authentication device ID corresponds to one registered with the central unit. If both of these checks are passed, the central unit at 345, will disarm the system if the message from the portable authentication device, containing the portable authentication device id and the special identifier, was received before expiry of the hands-free disarm beacon valid timer. The central unit may also at this stage send a further message to the disarm node to cause the disarm node to provide a notification of the fact that the system has been disarmed - for example, the disarm node may activate an appropriate indicator light 500 and/or provide a "disarm success" sound or announcement through the loudspeaker 530. The central unit may also send a further message to the portable authentication device to cause the portable authentication device to generate a signal indicating successful disarming of the system - for example, by illuminating an indicator on the portable authentication device.

As will be described later, the disarm request message sent by the portable authentication device to the central unit may also include a report on the RSSI levels of messages received by the portable authentication device from the wake up node, and the central unit may use the information about measured RSSI levels in such a report in determining whether or not to trust the received disarm request - i.e. whether to disregard the disarm request as invalid on the basis that it is likely to have come from a rogue actor (outside the usual range of the disarm node) rather than from an authorised user within range of the disarm node.

If the hands-free disarm beacon valid timer expires without the central unit having received a message from a portable authentication device including a registered portable authentication device ID and the special identifier, the central unit preferably transmits another message, at 360, to the disarm node (including the relevant disarm node identifier) to cause the disarm node to provide a visual or audible prompt, or both, indicating the need for the system to be disarmed in some other way - e.g. by entering appropriate credentials (such as a password or PIN) at the disarm node. The disarm node then provides this prompt, visually or audibly, or both, at 365. Any credentials entered at the disarm node are forwarded by the disarm node to the central unit. If appropriate credential are received by the central unit before expiry of the entry period timer, the system is disarmed.

It will be noted that the disarm credentials are not checked at the disarm node - with the disarm node sending a "success" message, if appropriate to the central unit, but rather that the entered credentials are transmitted from the disarm node to the central unit where they are checked.

The disarm node may be configured to send, at 350, if no disarm success/failure message has been received from the central unit, a polling message to the central unit after expiry of the hands-free disarm beacon valid timer period to check whether the disarm node should provide a disarm success indication. If the central unit receives such a polling message, it transmits a polling response to indicate success/failure and to cause the disarm node to provide a disarm success indication, or to indicate to failure - and the need to provide disarm credentials of some kind, as appropriate.

If no appropriate message is received from a portable authentication device within the hands-free disarm beacon valid timer and no appropriate disarm credentials are received before expiry of the entry period timer, the central unit identifies an alarm state. If the system is backed up by a central monitoring station (CMS), the central unit will send a status change message to the CMS, typically with the identifier of the door sensor that first indicated a door opening event. The CMS may then cause the central unit to activate relevant video cameras or other image capture devices, audio capture devices, etc. and provide data feeds from these to the CMS. The CMS may also invoke human intervention as appropriate.

The system may be set up in such a way that, if the disarm node detects an input at its user interface 485, of if a near field communication (NFC) sensor 472 in the disarm node detects the presence of an appropriate NFC tag (disarm dongle), the transmission of the disarm beacon by the disarm node is halted or forestalled. In which cases the system is disarmed by the central unit if the appropriate disarm credentials are provided at the disarm node (or at the central unit) through a user interface or by means of a registered NFC tag (that is, a tag that has previously been registered with the central unit), before expiry of the entry period timer.

In an alternative embodiment, the central unit does not start a hands-free disarm timer, but instead the disarm node starts such a timer on receiving the message sent at step 315 by the central unit. If the disarm node does not receive a disarm success message from the central unit before expiry of the hands-free disarm timer, the disarm node provides an audible and/or visual warning to the effect that hands-free disarm has failed and that the system must be disarmed in some other way - e.g. by entering a PIN or passcode, or using a registered NFC tag, to avoid the system going to an alarm state. The hands-free disarm timer run by the disarm node has, of course, a duration short enough to ensure that it expires before the entry period timer that is run by the central unit. If the security management system can provide entry period timers of different lengths, then the central unit is set up to inform the or each disarm node of the duration of the entry period timer that has been set - and an allowance is made for the time taken for the central unit to process a door open message and for a disarm node to respond to the message sent at step 315, so that the length of the hands-free disarm timer can be adjusted appropriately to suit the length of entry period timer selected.

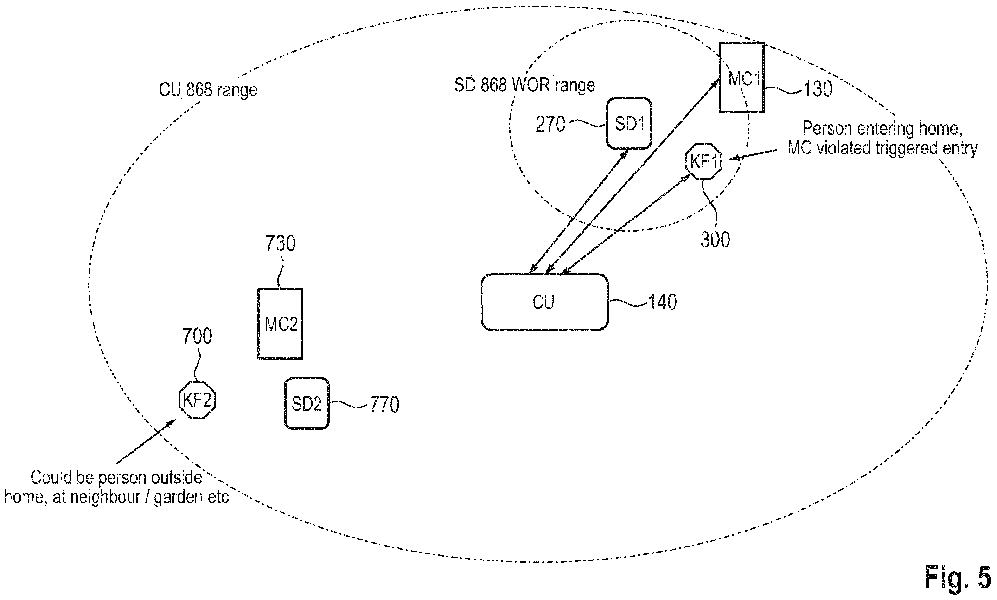

Preferably, RF communication between the central unit and the nodes and sensors of security monitoring systems according to embodiments of the invention use the industrial, scientific, and medical (ISM) radio bands, such as in Europe the 868MHz band. Within the 868 MHz band are several sub-bands dedicated to "non-specific SRD" which are of interest. For the beacon/polling signal that is used by the disarm node to activate nearby portable authentication devices we are actually interested in engineering short range communication, as will shortly be explained with reference to Figure 5.
portable authentication devices according to the invention may be configured to listen for instructions related to hands free disarm only on a particular channel or channels, with given frequency and given modulation, but to listen to another channel or channels on a different frequency and possibly with different modulation for other kinds of instructions.

Disarm instructions received from a disarm node do not typically contain a portable authentication device ID - because, if more than one portable authentication device is registered with the central unit, it cannot be assumed which if any portable authentication device is being carried by the person who opened the door whose opening has been sensed. But other message may be targeted to a particular portable authentication device or to a group of portable authentication devices that is a subset of all the registered portable authentication devices. Consequently, a portable authentication device according to embodiments of the invention may also be arranged to check the contents of received messages for the presence of that portable authentication device's ID. In this way, the central unit can target an individual portable authentication device or group of f portable authentication devices. For example, in the event that a portable authentication device has been mislaid, a "announce myself" message could be transmitted by the central unit flagged with the ID of the particular portable authentication device that has been mislaid. If other portable authentication devices receive the message, they do not respond to it , because it is flagged as an "announce myself" message and does not contain their ID. Whereas the missing portable authentication device sees that the message is flagged as an "announce myself" message, recognise its own ID, and announces its presence using one or more of its inbuilt indicators.

In general, monitoring systems according to embodiments of the invention will not be configured to transmit only disarm messages to portable authentication devices, but will also be configured to send other types of messages to portable authentication devices. In systems that do only send portable authentication devices disarm messages, a portable authentication device just needs to recognise a received message as a disarm message and respond with the disarm transmission identifier and the portable authentication device ID. But in systems where there are additional message types, message types will typically fall into two classes: targeted messages that are targeted at a subset of one or more of all the registered portable authentication device s, that include one or more portable authentication device IDs, and in respect of which a reaction is sought only from the portable authentication device (s) having an ID included in the message; and group or general messages, in respect of which a reaction is sought from any portable authentication device that receives the message - and which therefore do not need to include a portable authentication device ID (and which hence will generally not include any portable authentication device ID). For example, a central unit may be configured to instruct the portable authentication device involved in a hands free disarm event to provide a disarm success indicator on a successful disarm event. Such an instruction will preferably include the ID of the portable authentication device that transmitted the disarm request to the central unit (the portable authentication device ID having been included in that disarm request).

Messages may be sent to portable authentication devices at least from the central unit (of which, in some systems, there may be more than one) and disarm nodes. Where there are multiple message types, they may be labelled Disarm Message, Group, and Targeted - labels which can be considered to be class flags. If finer granularity is required, a further level of flags may be provided - so that a message type is indicated by a primary flag (Disarm Message, Group, or Targeted), and (at least for Group and Targeted) a secondary flag that indicates the specific message type within the class. Alternatively, a single level of flags may be provided, with typically multiple flags for each of the Group and Targeted classes.

Figure 5 is a schematic diagram illustrating why we want the range of the beacon signals from disarm nodes to have shorter range than transmissions from the central unit of a monitoring system. A first person entering a secured space opens a door, for example the front door that gives access to a street, which is monitored by door sensor 130. The person is carrying a portable authentication device 300 which is registered with the central unit of the monitoring system. Adjacent the door that is opened is a disarm node 270. The system's central unit 140 includes a database 415 that stores an association between an identifier for the door sensor 130 and an identifier for the disarm node 270. The secured space can also be accessed by another door of the building, for example a back door that gives access to a back garden of the building, and that door is fitted with another door sensor 730. Also near the back door, within the secured space, is another disarm node 770. A second portable authentication device, 700, is carried by another person who is also an occupier of the secured space, who is working in the back garden.

When the first person opens the front door, and the central unit causes the first disarm node to transmit a beacon signal, it is desirable that the beacon signal is received by the first portable authentication device 300 which is adjacent (say within a metre or two at most) of the first disarm node 270, so that the first key tag or portable authentication device wakes up, but that the second portable authentication device 700, that is carried by the second person who is working in the back garden, does not receive that beacon signal and therefore does not wake up. Of course in the scenario just described, the person opening the front door and the person carrying the second portable authentication device are both "legitimate" occupiers of the secured premises, so that there would be no problem inherently in sending a disarm signal from the second portable authentication device in respect of an entrance made by the first person (such as might happen if the first person had forgotten to carry their portable authentication device) - as might happen if the effective range of the beacon signal from the first disarm node 270 were received and acted upon by the second portable authentication device 700. But of course, it would be a different situation if the person opening the front door were a villain who was entering the premises unlawfully through the front door. In this case, if the villain didn't have a registered portable authentication device, their entry would still result in the system being disarmed if the effective range of the beacon signal from the first disarm node was such as to cause the second portable authentication device to send a disarm signal to the central unit. For this reason we want the effective range of beacon signals from disarm nodes to be restricted to the immediate vicinity of the disarm node and including the space between the disarm node and the door with which it is associated.

These scenarios also illustrate why we want the central unit to target beaconing messages just to the disarm node that is associated with the door sensor that has detected and reported a door-opening event. If instead the beaconing messages were generic, causing all disarm nodes to transmit beaconing signals, the second portable authentication device of the person working in the back garden might be triggered by beaconing signals from the second disarm node, when a villain without a portable authentication device was effecting illicit entrance through the front door - even if the beaconing signals from the disarm nodes were all very short range.

Within the 868/869 MHz band in Europe, the sub-band between 869.7 and 870Mhz is interesting for use when transmitting beaconing signals from the disarm nodes because it provides a relatively wide channel, the beacon channel, which allows the use of a high data rate, e.g. 250 kbit/s, which is helpful in reducing the effective range of the beacon signal. The effective radiated power ceiling of 5mW also poses no significant constraint for this application.

Achieving effective battery life of nodes and sensors in alarm and monitoring systems is a constant concern, because battery failure disables the relevant node or sensor, which can lead to loss of security, and battery replacement may involve a site visit by the system supplier - which is expensive and inconvenient. For a portable authentication device, loss of battery power means that the portable authentication device stops working, which is inconvenient for the user, and the cause of the failure may not be apparent to the user so that the user may require a site visit to identify and fix the problem. Consequently, we are interested in reducing power consumption in all of the battery powered components of the system, including the portable authentication device. For this reason the use of a wake on radio receiver in the portable authentication device is attractive, although acceptable battery life can also be obtained using a more conventional radio receiver that periodically wakes to listen (poll) for beacon signals.

One way of reducing portable authentication device power consumption during the wake up process is for the portable authentication device to use 2-stage detection. A first detection stage of the transceiver of the fob (portable authentication device) may be used to perform a first step which involves checking an RSSI level. For example, the transceiver in the portable authentication device may periodically perform a brief RSSI check polling the beacon channel, using just the RF front end of the transceiver, for example for a first period of less than a few milliseconds, preferably a fraction of a millisecond, e.g. around 0.5 milliseconds and then revert to its rest state if the sensed RSSI level is below some pre-set threshold. If the sensed RSSI level is above threshold, the portable authentication device listens for a brief period for a synch word from the disarm node - for example for a second period of a few milliseconds , for example for less than 10 milliseconds, e.g. 5ms. If no synch word is detected, the transceiver reverts to its rest state. But if a synch word is detected, the transceiver starts the full radio receiver which remains powered up, for example for a third period of between say 8 to 16ms, for example 10ms, to receive the full WoR packet. Each packet will typically last of the order of 220µs, and the disarm node may transmit for 2 to 4 seconds, e.g. for 3 seconds - meaning that the portable authentication device should be able to receive 20 to 30 packets. Clearly, the choice of duration for the various periods is a trade-off between power consumption, user experience and accuracy - but the timings given represent a reasonable compromise as a starting point to be adjusted as necessary.

RSSI detection can be achieved by activating just front end components of the transceiver, avoiding the need to power up all of the transceiver. If the detected RSSI level is below a threshold, the portable authentication device determines that there is unlikely to be valid data available and halts its RSSI check until the next cycle. The cycle period determines the length of time for which the disarm node needs to transmit its beacon and also sets a lower bound on how quickly hands-free disarm is likely to occur on average. The portable authentication device wake up interval, which is controlled by a clock in the portable authentication device, will typically be chosen based on the duration of the disarm node beacon. For example, if the disarm node transmits its beacon for 2 seconds, then a portable authentication device wake up interval of one second would provide a good likelihood that a portable authentication device within range of a broadcasting disarm node would be able to wake and retrieve the necessary information from the beacon signal. A portable authentication device wake up of interval (period between poling events) of 2 seconds will often be frequent enough when the disarm node is configured to transmit its beacon signal for 3 seconds. The portable authentication device wake up interval can conveniently be set at between a quarter and two thirds of the beacon duration. By having the portable authentication device check the RSSI for a very brief period, for example a few milliseconds, at each polling event, good battery life can generally be obtained. A shorter relative cycle time is not technically problematic, but it is likely to use proportionally more battery power and hence shorten battery life commensurately. The cycle time could be more than one half of the beacon duration, provided the system enables the portable authentication device to capture the beacon quickly after wake up, so that the necessary special ID can be recovered by the portable authentication device.

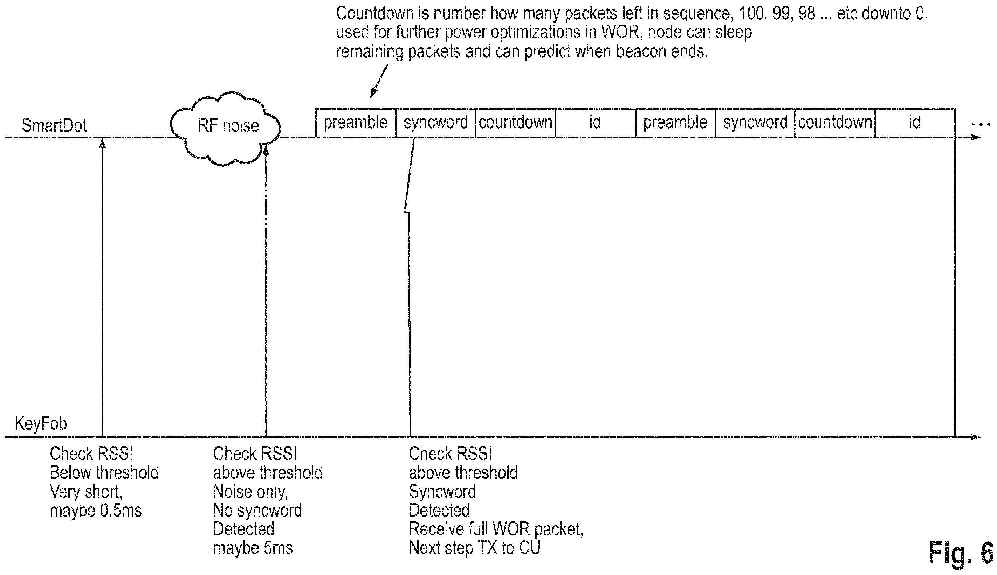

The disarm node transmits a beacon signal, on the beacon channel, which includes the special codeword (shown as ID in Figure 6) received from the central unit for this hands free disarm event. Typically, the beacon signal will be made up of a sequence of packets, each beginning with a preamble, followed by a synch word, then an identifier which may be the special ID from the central unit. Preferably, each packet includes a countdown value, the countdown value decreasing by one in each subsequent packet (to zero in the final packet of the sequence) and indicating the number of packets until the end of the sequence of packets. The system will typically be configured to cause the disarm node to transmit only one beacon sequence, with a single series of countdown values.

The beacon signal is recognised as such by the portable authentication device, because it is the only message of that kind with the relevant format in that channel, causing the portable authentication device to transmit a response including the special codeword (id).

By including sequence information in the beacon from the disarm node, it becomes possible for the portable authentication device to determine when the beacon transmission will end. Using this information, the portable authentication device can delay transmitting its response to the central unit until after the disarm node has finished transmitting - so that it is easier for the central unit to detect the response from the portable authentication device without local interference. This means that portable authentication device transmit power can be kept low, prolonging the life of the portable authentication device's battery, while still enabling the central unit to receive the portable authentication device's response. In addition, when the portable authentication device captures beacon packets, it can calculate how long it will be before the sequence ends. If the captured packets are early in the sequence, the portable authentication device can "snooze" or power down while waiting for the sequence to end, and then wake again in order to transmit its response to the central unit just after the sequence ends.

The portable authentication device will listen to multiple packets to be able to use statistics to get a reliable RSSI figure.

In order to reduce the effective range of the radio beacon, it is transmitted from the disarm node at a low power (e.g. -20dBm or less)with a high data rate (for example, 250kbps or more, say 400 kbps ) and with a low modulation index, to give an effective range of no more than about 5 metres? We limit out power from the disarm node to limit range. To make it harder to receive from a greater distance we have a high modulation and low modulation index. However the main reason is not the poor link budget but the speed. The higher the bitrate the more packets can be used for estimation. Sensitivity is in the range of around -90dBm at this settings and we try to be in line of sight, then the distance from the transmitter is given as the fading of the channel with distance, using Friis formula

Encryption, for example based on shared keys, is preferably used for all transmissions from and to the central unit in each of the embodiments of the invention

As mentioned previously, a further option to improve security, which may be used with any or all of the preceding options to further enhance the security of the system, is for the portable authentication device to include in the response message sent to the central unit details of the results of RSSI determinations made by the portable authentication device. In particular, the disarm node may be configured to send a series of wake up messages upon being prompted by the central unit to send a disarm instruction, including a disarm transmission identifier, to the portable authentication device. And the portable authentication device may be configured to determine the RSSI level of each of the messages of the series that are received from the disarm node. The portable authentication device may be configured to include in the disarm request sent to the central unit a report based on the determined RSSI levels. For example, the portable authentication device may be configured to send a summary of the RSSI levels measured, such as the number of messages/packets measured or measured above a certain level, maximum RSSI level, etc. Inclusion of the RSSI data can be used by the system to reduce the susceptibility of the system to "relay attacks" of the type used to fool passive entry systems (PES) of cars. The portable authentication device would report RSSI values as, for example, max/min values, and an average, and the central unit may hold factory pre-set values for a "real" disarm, and/or these may be supplemented or replaced with real world values obtained during commissioning/testing of the system.

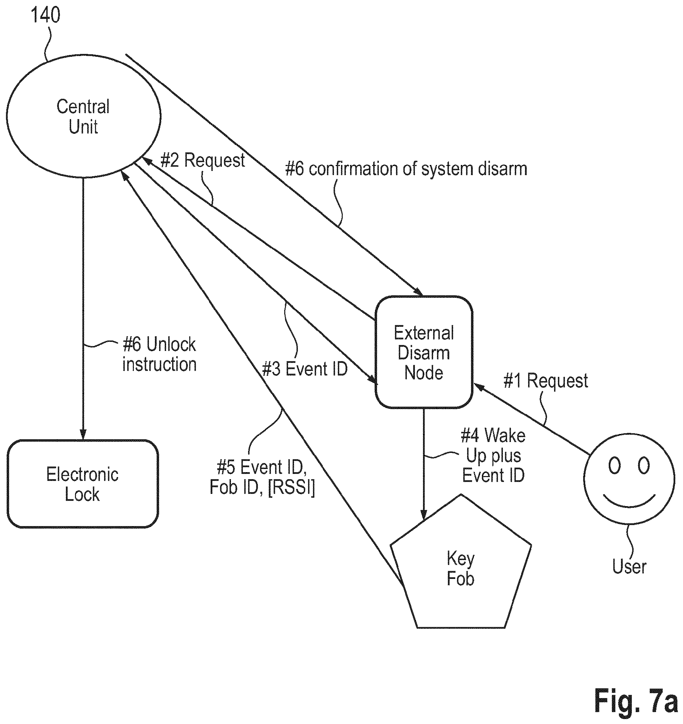

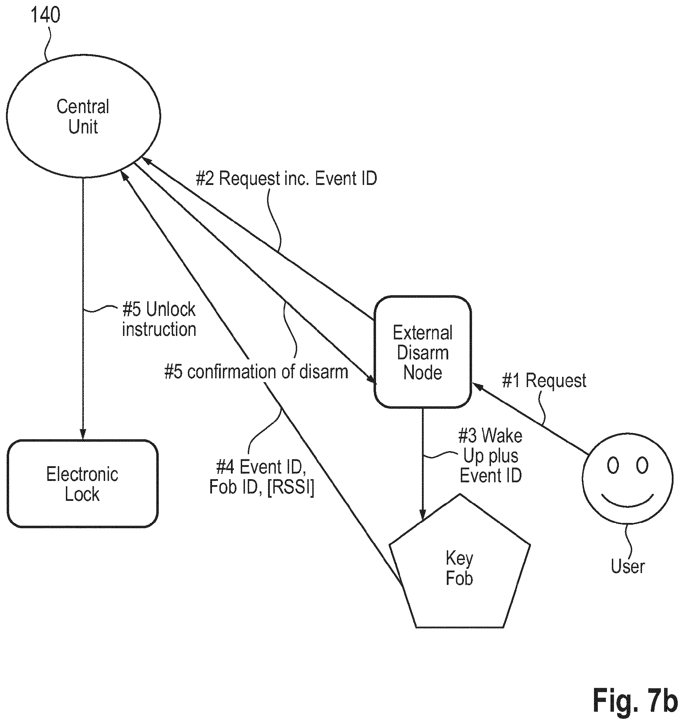

In addition to being useable within the monitored space, a disarm node according to an embodiment of the invention could usefully be disposed outside the monitored space or building as a means for a user to unlock a door that gives access to the monitored space of building and that has an electronically controlled lock, and to disarm the monitoring system. Such a system and its operation are represented schematically in Figures 7a and 7b. The provision of such an externally located disarm node could also permit a user to lock the electronically controlled lock of an access door with or without arming the system. For this use, a disarm node would preferably include a selector arrangement to enable a user to initiate an event. For example, the disarm node could include a selector to enable a user to unlock the electronically controlled lock of a door and disarming the monitoring system from an armed state, a selector for locking the lock of the door, and another selector for arming the system or for locking the lock of the door and arming the system. Such an electronically controlled lock would typically include an RF receiver, e.g. an RF transceiver, to receive control messages to lock and unlock the lock, and would typically also include means to decrypt encrypted messages received by the receiver. The selectors could be provided in the form of a keypad or as individual "buttons", preferably using capacitance sensing technology rather than as mechanical switches.

In use, according to a first embodiment, illustrated schematically in Figure 7b), such an externally located disarm node would react to operation of one of the selectors (event #1) by starting a "wake on radio" process (event #3) effectively to search for any user portable authentication device within range ( within 5 metres or less, e.g. within 1 or 2 metres) of the disarm node by transmitting wake up messages generally as previously described. The wake up message includes a unique event ID (e.g. a random number) which serves the same function as the unique event ID that the central unit has previously been described as generating for each door opening event.

In addition, the disarm node would also transmit (event#2) a report to the central unit indicating the selector that was activated - i.e. informing the central unit of the user's request. The report from the disarm node also includes the disarm node identifier and the unique event ID. A user portable authentication device receiving such a wake up message responds by transmitting (event #4) a message to the central unit, including the unique event ID and its own ID. Preferably, the user portable authentication device is also configured to perform RSSI measurement on wake up messages received from the disarm node and to include information on these RSSI measurements in the message sent to the central unit.

In an alternative second embodiment, illustrated schematically in Figure 7a, the externally located disarm node would react to operation of one of the selectors (event #1) by using its RF transceiver to send (event #2) a change status request message to the central unit, including the details of the change requested, together with the disarm node ID. The central node would transmit (event #3) a response including the disarm node ID together with a unique event identifier (e.g. a random number) which is effective to cause the disarm node to start a wake on radio process. The response from the central unit could include a command for the disarm node, or the system could be arranged so that the disarm node responds to receiving a message from the central unit that includes a unique event identifier together with the disarm node's ID by starting the wake on radio process. The disarm node receiving such a response, including its own ID, would use its RF transceiver to transmit wake on radio signals (event #4), including the unique event identifier. A portable authentication device receiving the wake on radio signals would wake and transmit (event #5) a signal including its own ID, and the unique event identifier. Preferably, the user portable authentication device is also configured to perform RSSI measurement on wake up messages received from the disarm node and to include information on these RSSI measurements in the message sent to the central unit.

With both the first and second embodiment of this external disarm node variant the sequence of operations continues as follows.

The central unit, on receiving the message from the user's portable authentication device checks to determine whether portable authentication device ID included in the message is one registered with the central unit, and also whether the event ID matches that of a "current" event. If the message received from the user portable authentication device includes RSSI information, the central unit will also take this into account in deciding whether the status change request is a valid one. If the central unit is determined to be valid, then the central unit actions the request by, for example sending an unlock command to the relevant door lock (event #6 in Figure 7a, event #5 in Figure 7b) and disarming the security monitoring system, or by sending a lock command to the relevant door lock and arming the system. In addition, the central unit may be configured to send a status change notification to the disarm node(event #6 in Figure 7a, event #5 in Figure 7b), including the disarm node ID, so that the disarm node can indicate the change of status visibly and or audibly.

Also, if the user portable authentication device includes a haptic device, the central unit may transmit an instruction to the portable authentication device to cause the portable authentication device to activate the haptic device to indicate completion of the requested action. A portable authentication device having one or more visual indicators, e.g. one or more LEDs, may also be triggered to provide a visual indication of completion of a requested action.

A portable authentication device having a haptic element may also be configured to provide haptic feedback on receipt of a wake up message from a disarm node (preferably a different mode of feedback from that for successful completion of a requested action), so that a user knows that the portable authentication device has been "found" by the disarm node.

The central unit may optionally transmit an action request "failure" message, including the disarm node ID, that the disarm node can use to provide feedback of failure to complete a requested action. The central unit can also send a failure message, including the portable authentication device ID, that the portable authentication device can use to provide feedback of failure to complete a requested action.

If the security monitoring system having a disarm node outside the monitored building or monitored zone is one which is connected to a central monitoring station, it can be useful for the registered owner of the security monitoring system to be informed of failed requests to change status. In particular, where an action request is made by operation of an event selector, and no authorised portable authentication device is found - or signals are received from a non-authorised source, details of the event may be reported by the central unit to the central monitoring station. The central monitoring station can act on such reports, by for example, sending human operatives to survey the premises, but may also send such reports to the registered owner. For example, the registered user may have a smartphone "app" which may be arranged receive notifications from the central monitoring station. The central monitoring station may be arranged to provide real time or near real time notification of failed action requests. Such a system may be further enhanced by providing notifications to the app of action requests and their results both for success and for failure, by configuring the central unit to report all such action requests and their results to the central monitoring unit.

## Claims

1. A security monitoring system (100) for a building or a secured space within a building, the system including:
a central unit (140) for controlling, arming and disarming the security monitoring system (100), and having a radio frequency transceiver (420);
a door (50) giving access to the building or the secured space;
an electrically controlled lock which is lockable to lock the door to prevent the door being opened from outside the building or the secured space, and which can be unlocked to enable the door to be opened from outside the building;
a disarm node (270) for disarming the system, the node having a user interface (485) to receive a user input to change the status of the system, and a radio frequency transmitter to transmit, in consequence of the user input, a status change message to the central unit (140), the disarm node (270) being located outside the building or the space;
and a portable authentication device (300) to permit hands-free disarming of the security monitoring system (100), the portable authentication device (300) including a radio transceiver (610) and having a portable authentication device identity that is registered with the central unit (140);
the disarm node (270) being configured to:
(i) transmit from the disarm node's transceiver, using a short-range transmission mode, a wake up message including a status change event identifier;
the portable authentication device (300) being configured to respond to receipt of the wake up message by transmitting, using the portable authentication device's transceiver (610), a response message including the status change event identifier and the portable authentication device identity;
the central unit (140) being configured:
in response to receiving the response message from the portable authentication device (300), to :
(v) check whether the status change event identifier is for a current status change event;
(vi) check whether the portable authentication device identifier is for a portable authentication device (300) registered with the central unit (140); and
(vii)if the two checks both give positive results, to implement the requested status change, and, if the status change request includes a request to unlock the electronic lock, to use the central unit's transceiver (420) to transmit a signal to cause the electronic lock to be unlocked.

2. A security monitoring system (100) as claimed in claim 1, wherein the central unit (140) is configured to:
generate the status change event identifier in response to receipt of the status change message from the disarm node (270); and
transmit, using the central unit's transceiver (420), the generated status change event identifier to the disarm node (270).

3. A security monitoring system (100) as claimed in claim 1 or claim 2,
wherein the disarm node (270) is configured to:
generate the status change event identifier in response to receipt of the user's status change request;
transmit, using the disarm node's transceiver the generated status change event identifier to the central unit (140).

4. A security monitoring system (100) as claimed in any one of claims 1 to 3, wherein the central unit (140) is configured, in the event that the requested status change is implemented, to transmit, using the central unit's transceiver (420), a status change confirmation message.

5. A method of disarming a security monitoring system (100) for a building or
a secured space within a building, the system including:
a central unit (140) for controlling, arming and disarming the security monitoring system (100), and having a radio frequency transceiver (420);
a door giving access to the building or the secured space;
an electrically controlled lock which is lockable to lock the door to prevent the door being opened from outside the building or the secured space, and which can be unlocked to enable the door to be opened from outside the building;
a disarm node (270) for disarming the system (100), the node having a user interface (485) to receive a user input to change the status of the system, and a radio frequency transmitter, the disarm node (270) being located outside the building or the space;
and a portable authentication device (300) to permit hands-free disarming of the security monitoring system, the portable authentication device (300) including a radio transceiver (610) and having a portable authentication device identity that is registered with the central unit (140);
the method comprising:
(i) using the disarm node's transceiver to:
transmit, in consequence of the user input, a status change message to the central unit (140); and
transmit, using a short-range transmission mode, a wake up message including a status change event identifier;
(ii) using the portable authentication device's transceiver (610) to transmit, in response to receipt of the wake up message, a response message including the status change event identifier and the portable authentication device identity;
(iii) checking, using the central unit (140), in response to receiving the response message from the portable authentication device (300), whether the status change event identifier is for a current status change event, and whether the portable authentication device identifier is for a portable authentication device (300) registered with the central unit (140); and
(iv) if the two checks both give positive results, implementing the requested status change, and, if the status change request includes a request to unlock the electronic lock, using the central unit's transceiver (420) to transmit a signal to cause the electronic lock to be unlocked.

6. A method as claimed in claim 5, further comprising:
generating the status change event identifier in the central unit (140) in response to receipt of the status change message from the disarm node (270); and
transmitting, using the central unit's transceiver (420), the generated status change event identifier to the disarm node (270).

7. A method as claimed in claim 5 or claim 6, further comprising:
generating the status change event identifier in the disarm node (270) in response to receipt of the user's status change request;
transmitting, using the disarm node's transceiver, the generated status change event identifier to the central unit (140).

8. A method as claimed in any one of claims 5 to 7, further comprising:
in the event that the requested status change is implemented, transmitting, using the central unit's transceiver (420), a status change confirmation message.

## Patentansprüche

1. Sicherheitsüberwachungssystem (100) für ein Gebäude oder einen gesicherten Raum innerhalb eines Gebäudes, das System beinhaltend:
eine zentrale Einheit (140) zum Steuern, Aktivieren und Deaktivieren des Sicherheitsüberwachungssystems (100), die einen Funkfrequenz-Sender-Empfänger (420) aufweist;
eine Tür (50), die Zugang zu dem Gebäude oder dem gesicherten Raum bietet;
ein elektrisch gesteuertes Schloss, das dazu verschließbar ist, die Tür zu verschließen, um zu verhindern, dass die Tür von außerhalb des Gebäudes oder des gesicherten Raums geöffnet wird, und das aufgeschlossen werden kann, um zu ermöglichen, dass die Tür von außerhalb des Gebäudes geöffnet wird;
einen Deaktivierungsknoten (270) zum Deaktivieren des Systems, wobei der Knoten Folgendes aufweist: eine Benutzerschnittstelle (485), um eine Benutzereingabe zu empfangen, um den Status des Systems zu ändern, und einen Funkfrequenz-Sender, um als Folge der Benutzereingabe, eine Statusänderungsnachricht an die zentrale Einheit (140) zu senden, wobei der Deaktivierungsknoten (270) sich außerhalb des Gebäudes oder des Raums befindet;
und eine tragbare Authentifizierungsvorrichtung (300), um ein handfreies Deaktivieren des Sicherheitsüberwachungssystems (100) zu erlauben, wobei die tragbare Authentifizierungsvorrichtung (300) einen Funk-Sender-Empfänger (610) beinhaltet und eine Identität der tragbaren Authentifizierungsvorrichtung aufweist, die in der zentralen Einheit (140) registriert ist;
wobei der Deaktivierungsknoten (270) dazu konfiguriert ist:
(i) von dem Sender-Empfänger des Deaktivierungsknotens unter Verwendung eines Nahbereichssendemodus, eine Weckruf-Nachricht zu senden, die eine Kennung eines Statusänderungsereignisses beinhaltet;
wobei die tragbare Authentifizierungsvorrichtung (300) dazu konfiguriert ist, auf einen Empfang der Weckruf-Nachricht durch Senden, unter Verwendung des Sender-Empfängers (610) der tragbaren Authentifizierungsvorrichtung, einer Antwortnachricht zu antworten, die die Kennung des Statusänderungsereignisses und die Identität der tragbaren Authentifizierungsvorrichtung beinhaltet;
wobei die zentrale Einheit (140) dazu konfiguriert ist:
als Antwort auf das Empfangen der Antwortnachricht von der tragbaren Authentifizierungsvorrichtung (300):
(v) zu prüfen, ob die Kennung des Statusänderungsereignisses für ein aktuelles Statusänderungsereignis steht;
(vi) zu prüfen, ob die Kennung der tragbaren Authentifizierungsvorrichtung für eine tragbare Authentifizierungsvorrichtung (300) steht, die in der zentralen Einheit (140) registriert ist; und
(vii) wenn beide der zwei Prüfungen positive Ergebnisse liefern, die angeforderte Statusänderung zu implementieren, und, wenn die Statusänderungsanforderung eine Anforderung beinhaltet, das elektronische Schloss aufzuschließen, den Sender-Empfänger (420) der zentralen Einheit zu verwenden, um ein Signal dazu zu senden, zu veranlassen, dass das elektronische Schloss aufgeschlossen wird.

2. Sicherheitsüberwachungssystem (100) wie in Anspruch 1 beansprucht, wobei die zentrale Einheit (140) dazu konfiguriert ist:
die Kennung des Statusänderungsereignisses als Antwort auf den Empfang der Statusänderungsnachricht von dem Deaktivierungsknoten (270) zu erzeugen; und
unter Verwendung des Sender-Empfängers (420) der zentralen Einheit die erzeugte Kennung des Statusänderungsereignisses an den Deaktivierungsknoten (270) zu senden.

3. Sicherheitsüberwachungssystem (100) wie in Anspruch 1 oder in Anspruch 2 beansprucht, wobei der Deaktivierungsknoten (270) dazu konfiguriert ist:
die Kennung des Statusänderungsereignisses als Antwort auf den Empfang der Statusänderungsanforderung des Benutzers zu erzeugen;
unter Verwendung des Sender-Empfängers des Deaktivierungsknotens die erzeugte Kennung des Statusänderungsereignisses an die zentrale Einheit (140) zu senden.

4. Sicherheitsüberwachungssystem (100) wie in einem der Ansprüche 1 bis 3 beansprucht, wobei die zentrale Einheit (140) dazu konfiguriert ist, in dem Falle, dass die angeforderte Statusänderung implementiert ist, eine Statusänderungsbestätigungsnachricht, unter Verwendung des Sender-Empfängers (420) der zentralen Einheit, zu senden.

5. Verfahren zum Deaktivieren eines Sicherheitsüberwachungssystems (100) für ein Gebäude oder einen gesicherten Raum innerhalb eines Gebäudes, das System beinhaltend:
eine zentrale Einheit (140) zum Steuern, Aktivieren und Deaktivieren des Sicherheitsüberwachungssystems (100), die einen Funkfrequenz-Sender-Empfänger (420) aufweist;
eine Tür, die Zugang zu dem Gebäude oder dem gesicherten Raum bietet;
ein elektrisch gesteuertes Schloss, das dazu verschließbar ist, die Tür zu verschließen, um zu verhindern, dass die Tür von außerhalb des Gebäudes oder des gesicherten Raums geöffnet wird, und das aufgeschlossen werden kann, um zu ermöglichen, dass die Tür von außerhalb des Gebäudes geöffnet wird;
einen Deaktivierungsknoten (270) zum Deaktivieren des Systems (100), wobei der Knoten Folgendes aufweist: eine Benutzerschnittstelle (485), um eine Benutzereingabe zu empfangen, um den Status des Systems zu ändern, und einen Funkfrequenz-Sender, wobei der Deaktivierungsknoten (270) sich außerhalb des Gebäudes oder des Raums befindet;
und eine tragbare Authentifizierungsvorrichtung (300), um ein handfreies Deaktivieren des Sicherheitsüberwachungssystems zu erlauben, wobei die tragbare Authentifizierungsvorrichtung (300) einen Funk-Sender-Empfänger (610) beinhaltet und eine Identität der tragbaren Authentifizierungsvorrichtung aufweist, die in der zentralen Einheit (140) registriert ist;
das Verfahren umfassend:
(i) Verwenden des Sender-Empfängers des Deaktivierungsknotens dazu:
als Folge der Benutzereingabe eine Statusänderungsnachricht an die zentrale Einheit (140) zu senden; und
(i) unter Verwendung eines Nahbereichssendemodus, eine Weckruf-Nachricht zu senden, die eine Kennung eines Statusänderungsereignisses beinhaltet;
(ii) Verwenden des Sender-Empfängers (610) der tragbaren Authentifizierungsvorrichtung, um als Antwort auf den Empfang einer Weckruf-Nachricht eine Antwortnachricht zu senden, die die Kennung des Statusänderungsereignisses und die Identität der tragbaren Authentifizierungsvorrichtung beinhaltet;
(iii) Prüfen, unter Verwendung der zentralen Einheit (140), als Antwort auf das Empfangen der Antwortnachricht von der tragbaren Authentifizierungsvorrichtung (300), ob die Kennung des Statusänderungsereignisses für ein aktuelles Statusänderungsereignis steht, und ob die Kennung der tragbaren Authentifizierungsvorrichtung für eine tragbare Authentifizierungsvorrichtung (300) steht, die in der zentralen Einheit (140) registriert ist;
(vii) wenn beide der zwei Prüfungen positive Ergebnisse liefern, Implementieren der angeforderten Statusänderung, und, wenn die Statusänderungsanforderung eine Anforderung beinhaltet, das elektronische Schloss aufzuschließen, Verwenden des Sender-Empfängers (420) der zentralen Einheit, um ein Signal dazu zu senden, zu veranlassen, dass das elektronische Schloss aufgeschlossen wird.

6. Verfahren wie in Anspruch 5 beansprucht, ferner umfassend:
Erzeugen der Kennung des Statusänderungsereignisses in der zentralen Einheit (140) als Antwort auf den Empfang der Statusänderungsnachricht von dem Deaktivierungsknoten (270); und Senden, unter Verwendung des Sender-Empfängers (420) der zentralen Einheit, der erzeugten Kennung des Statusänderungsereignisses an den Deaktivierungsknoten (270).

7. Verfahren wie in Anspruch 5 oder Anspruch 6 beansprucht, ferner umfassend:
Erzeugen der Kennung des Statusänderungsereignisses in dem Deaktivierungsknoten (270) als Antwort auf den Empfang der Statusänderungsanforderung des Benutzers;
Senden, unter Verwendung des Sender-Empfängers des Deaktivierungsknotens, der erzeugten Kennung des Statusänderungsereignisses an die zentrale Einheit (140).

8. Verfahren wie in einem der Ansprüche 5 bis 7 beansprucht, ferner umfassend: in dem Falle, dass die angeforderte Statusänderung implementiert ist, Senden einer Statusänderungsbestätigungsnachricht, unter Verwendung des Sender-Empfängers (420) der zentralen Einheit.

## Revendications

1. Système de surveillance de sécurité (100) pour un bâtiment ou un espace sécurisé au sein d'un bâtiment, le système incluant :
une unité centrale (140) pour commander, armer et désarmer le système de surveillance de sécurité (100), et ayant un émetteur-récepteur radiofréquence (420) ;
une porte (50) donnant accès au bâtiment ou à l'espace sécurisé ;
un verrou à commande électrique qui peut être verrouillé pour verrouiller la porte pour empêcher l'ouverture de la porte depuis l'extérieur du bâtiment ou de l'espace sécurisé, et qui peut être déverrouillé pour permettre l'ouverture de la porte depuis l'extérieur du bâtiment ;
un nœud de désarmement (270) pour désarmer le système, le nœud ayant une interface utilisateur (485) pour recevoir une entrée utilisateur pour changer l'état du système, et un émetteur radiofréquence pour transmettre, suite à l'entrée utilisateur, un message de changement d'état à l'unité centrale (140), le nœud de désarmement (270) étant situé à l'extérieur du bâtiment ou de l'espace ;
et un dispositif d'authentification portable (300) pour permettre le désarmement mains libres du système de surveillance de sécurité (100), le dispositif d'authentification portable (300) incluant un émetteur-récepteur radio (610) et ayant une identité de dispositif d'authentification portable qui est enregistrée auprès de l'unité centrale (140) ;
le nœud de désarmement (270) étant configuré pour :
(i) transmettre à partir de l'émetteur-récepteur du nœud de désarmement, en utilisant un mode de transmission à courte portée, un message de réveil incluant un identifiant d'événement de changement d'état ;
le dispositif d'authentification portable (300) étant configuré pour répondre à la réception du message de réveil en transmettant, en utilisant l'émetteur-récepteur du dispositif d'authentification portable (610), un message de réponse incluant l'identifiant d'événement de changement d'état et l'identité du dispositif d'authentification portable ;
l'unité centrale (140) étant configurée :
en réponse à la réception du message de réponse du dispositif d'authentification portable (300), pour :
(v) vérifier si l'identifiant d'événement de changement d'état correspond à un événement de changement d'état actuel ;
(vi) vérifier si l'identifiant du dispositif d'authentification portable correspond à un dispositif d'authentification portable (300) enregistré auprès de l'unité centrale (140) ; et
(vii) si les deux vérifications donnent toutes deux des résultats positifs, mettre en œuvre le changement d'état demandé et, si la demande de changement d'état inclut une demande de déverrouillage du verrou électronique, utiliser l'émetteur-récepteur (420) de l'unité centrale pour transmettre un signal pour entraîner le déverrouillage du verrou électronique.

2. Système de surveillance de sécurité (100) selon la revendication 1, dans lequel l'unité centrale (140) est configurée pour :
générer l'identifiant d'événement de changement d'état en réponse à la réception du message de changement d'état provenant du nœud de désarmement (270) ; et
transmettre, en utilisant l'émetteur-récepteur de l'unité centrale (420), l'identifiant d'événement de changement d'état généré au nœud de désarmement (270).

3. Système de surveillance de sécurité (100) selon la revendication 1 ou la revendication 2, dans lequel le nœud de désarmement (270) est configuré pour :
générer l'identifiant d'événement de changement d'état en réponse à la réception de la demande de changement d'état de l'utilisateur ;
transmettre, en utilisant l'émetteur-récepteur du nœud de désarmement, l'identifiant d'événement de changement d'état généré à l'unité centrale (140).

4. Système de surveillance de sécurité (100) selon l'une quelconque des revendications 1 à 3, dans lequel l'unité centrale (140) est configurée, dans le cas où le changement d'état demandé est mis en œuvre, pour transmettre, en utilisant l'émetteur-récepteur (420) de l'unité centrale, un message de confirmation de changement d'état.

5. Procédé de désarmement d'un système de surveillance de sécurité (100) pour un bâtiment ou un espace sécurisé au sein d'un bâtiment, le système incluant :
une unité centrale (140) pour commander, armer et désarmer le système de surveillance de sécurité (100), et ayant un émetteur-récepteur radiofréquence (420) ;
une porte donnant accès au bâtiment ou à l'espace sécurisé ;
un verrou à commande électrique qui peut être verrouillé pour verrouiller la porte pour empêcher l'ouverture de la porte depuis l'extérieur du bâtiment ou de l'espace sécurisé, et qui peut être déverrouillé pour permettre l'ouverture de la porte depuis l'extérieur du bâtiment ;
un nœud de désarmement (270) pour désarmer le système (100), le nœud ayant une interface utilisateur (485) pour recevoir une entrée utilisateur pour changer l'état du système, et un émetteur radiofréquence, le nœud de désarmement (270) étant situé à l'extérieur du bâtiment ou de l'espace ;
et un dispositif d'authentification portable (300) pour permettre le désarmement mains libres du système de surveillance de sécurité, le dispositif d'authentification portable (300) incluant un émetteur-récepteur radio (610) et ayant une identité de dispositif d'authentification portable qui est enregistrée auprès de l'unité centrale (140) ;
le procédé comprenant :
(i) l'utilisation de l'émetteur-récepteur du nœud de désarmement pour :
transmettre, suite à l'entrée utilisateur, un message de changement d'état à l'unité centrale (140) ; et
transmettre, en utilisant un mode de transmission à courte portée, un message de réveil incluant un identifiant d'événement de changement d'état ;
(ii) l'utilisation de l'émetteur-récepteur (610) du dispositif d'authentification portable pour transmettre, en réponse à la réception du message de réveil, un message de réponse incluant l'identifiant d'événement de changement d'état et l'identité du dispositif d'authentification portable ;
(iii) le fait de vérifier, en utilisant l'unité centrale (140), en réponse à la réception du message de réponse du dispositif d'authentification portable (300), si l'identifiant d'événement de changement d'état concerne un événement de changement d'état actuel, et si l'identifiant du dispositif d'authentification portable concerne un dispositif d'authentification portable (300) enregistré auprès de l'unité centrale (140) ; et
(iv) si les deux vérifications donnent toutes deux des résultats positifs, la mise en œuvre du changement d'état demandé et, si la demande de changement d'état inclut une demande de déverrouillage du verrou électronique, l'utilisation de l'émetteur-récepteur (420) de l'unité centrale pour transmettre un signal pour entraîner le déverrouillage du verrou électronique.

6. Procédé selon la revendication 5, comprenant en outre :
la génération de l'identifiant d'événement de changement d'état dans l'unité centrale (140) en réponse à la réception du message de changement d'état provenant du nœud de désarmement (270) ; et la transmission, en utilisant l'émetteur-récepteur de l'unité centrale (420), de l'identifiant d'événement de changement d'état généré au nœud de désarmement (270).

7. Procédé selon la revendication 5 ou la revendication 6, comprenant en outre :
la génération de l'identifiant d'événement de changement d'état dans le nœud de désarmement (270) en réponse à la réception de la demande de changement d'état de l'utilisateur ;
la transmission, en utilisant l'émetteur-récepteur du nœud de désarmement, de l'identifiant d'événement de changement d'état généré à l'unité centrale (140).

8. Procédé selon l'une quelconque des revendications 5 à 7, comprenant en outre :
dans le cas où le changement d'état demandé est mis en œuvre, la transmission, en utilisant l'émetteur-récepteur (420) de l'unité centrale, d'un message de confirmation de changement d'état.
